# EUROPEAN PATENT APPLICATION

(11) **EP 1 814 345 A1**
(43) Date of publication of application: **01.08.2007**
(21) Application number: 06290160.8
(22) Date of filing: 26.01.2006
(51) Int. Cl.: H04Q 7/36

(54) **Method for transferring signals in sectors by a base station of a wireless telecommunication network**

(71) Applicant: Mitsubishi Electric Information Technology Centre Europe B.V., 1119 NS Schiphol Rijk (NL); MITSUBISHI DENKI KABUSHIKI KAISHA, Chiyoda-ku Tokyo 100-8310 (JP)
(72) Inventor: Hara Yoshitaka Mitsubishi Electric ITE, 35708 Rennes Cedex 7 (FR)
(74) Representative: Maillet, Alain

(57) **Abstract**

The present invention concerns a base station of a wireless telecommunication network, the base station comprising antennas and means for directing the signals transferred by the antennas into plural first sectors (15a,15b,15c,15d), at least one first sector being juxtaposed to two other first sectors through respective frontiers. The base station further comprises means for directing the signals transferred by the antennas into at least one second sector (25a,25b,25c,25d), the second sector or each second sector having a direction which is sensibly equal to the direction of a single frontier of two first sectors. The invention concerns also a terminal and the associated methods.

## Description

The present invention relates generally to a base station and a method for transferring signals by the base station of a wireless telecommunication network, wherein the base station comprises antennas and is able to direct the signals transferred by the antennas into plural sectors.

Beamforming has been investigated for systems comprising transmitters using multiple antennas in order to optimize the range and performance of the wireless link between the transmitter end and the receiver end.

Using beamforming, it is possible to partition the total area covered by a base station in different sectors.

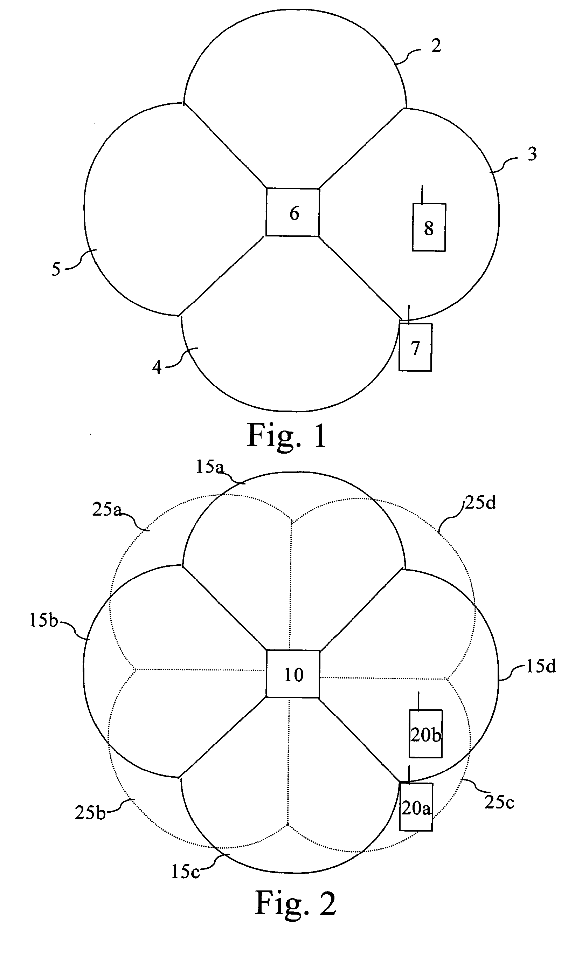

The Fig. 1 shows an example of a base station which radiates signals into plural sectors.

In the Fig. 1, the base station 6 radiates signals through four sectors noted 2, 3, 4 and 5.

When the terminal 7 is located at the frontier of two sectors, as example at the frontier of the sectors 3 and 4, the power of the signals received from the base station 6 is lower than one received by the terminal 8 which is located in the centre of the sector 3. In such case, the signal reception performances of the terminal 7 are decreased in an important manner.

The aim of the invention is therefore to propose a method, and a base station which allow to maintain the signal reception performances of the terminals which are located at the frontier of two sectors wherein a base station radiates signals.

To that end, the present invention concerns a base station of a wireless telecommunication network, the base station comprising antennas and means for directing the signals transferred by the antennas into plural first sectors, at least one first sector being juxtaposed to two other first sectors through respective frontiers. The base station further comprises means for directing the signals transferred by the antennas into at least one second sector, the second sector or each second sector having a direction which is sensibly equal to the direction of a single frontier of two first sectors.

The present invention concerns also a method for transferring signals by a base station of a wireless telecommunication network, the base station comprising antennas, the signals transferred by the antennas being directed into plural first sectors, at least one first sector being juxtaposed to two other first sectors through respective frontiers, characterised in that the method comprises the step executed by the base station of directing the signals transferred by the antennas into at least one second sector, the second sector or each second sector having a direction which is sensibly equal to the direction of a single frontier of two first sectors.

Thus, the signal reception performances of the terminals which are located at the frontier of two first sectors are improved.

By directing the signals transferred by the antennas into a second sector having a direction which is sensibly equal to the direction of a frontier of two first sectors, the terminals which are located in that frontier have good signal reception performances.

Furthermore, by directing the signals transferred by the antennas into a second sector having a direction which is sensibly equal to the direction of a single frontier of two first sectors, it is possible to direct the signals transferred into the second sector without needing any extra antenna for the base station. The present invention can then be implemented simply and without increasing the cost of the base station.

According to a particular feature, the signals transferred into the first sectors are transferred in frequency subbands of a first group of frequency subbands and the signals transferred into the second sector or each second sector are transferred in frequency subbands of a second group of frequency subbands different from the first group of frequency subbands.

Thus, as a second sector overlaps two first sectors, the interferences generated by the overlap are reduced.

According to a particular feature, the base station transfers pilot signals in each frequency subband.

Thus, by transferring pilot signals known by the terminals, each terminal is able to execute some measurements on the received pilot signals and get information about the channel conditions which exist between itself and the base station.

According to a particular feature, the base station receives information related to the transferred pilot signals from a terminal and determines if the signals to be transferred to the terminal have to be transferred into one of the first sectors or into the second sector.

Thus, the base station is aware about the channel conditions which exist between itself and each terminal and is able to determine the best sector to be used for the transfer of signals to the terminal.

According to a particular feature, the base station determines in which frequency subbands of the first group of frequency subband or in which frequency subbands of the second group of frequency subbands, the signals to be transferred to the terminal have to be transferred according to the information related to the pilot signals.

Thus, if the pilot signal received by the terminal in a frequency subband is not correct, i.e. the power strength or the Signal to Interference plus Noise Ratio (SINR) of the received pilot signal power strength is low, the base station doesn't use such frequency subband. The overall reception performances of the terminal are then improved.

In such case, the data, instead of being transferred in that frequency subband for which the reception of the pilot signal is not correct, are transferred in another frequency subband of the same group of frequency subbands.

According to a particular feature, the base station determines if a frequency subband has to belong to the first group of frequency subbands or to the second group of frequency subbands according to the quantity of information transferred in the first and/or second sectors.

Thus, the base station, by dynamically adjusting the resources allocated to the first and second sectors according to the quantity of information transferred in these sectors, uses the resources of the wireless network in an efficient way.

According to a particular feature, the base station determines if a frequency subband has to belong to the first group of frequency subbands or to the second group of frequency subbands according to the information related to the pilot signals.

Thus, if the quality of reception of a pilot signal in a frequency subband of a group of frequency subbands is not good for some terminals, the present invention reallocates such frequency subband to the other group of frequency subbands.

As example, the quality of the received pilot signal in a frequency subband of the first group of frequency subbands is deteriorated by multi-paths due to the presence of buildings in the first sector. By allocating such frequency subband to the second group of frequency subbands, this frequency subband is used in second sectors where the above mentioned multi-paths problems do not exist or a reduced a lot.

The present invention optimizes then the use of the resources of the wireless network.

According to still another aspect, the present invention concerns a device for determining in which sector a terminal of a wireless telecommunication network is located, the terminal receiving pilot signals in frequency subbands of a first group of frequency subbands from two juxtaposed first sectors, characterised in that the device is included in the terminal and comprises :
- means for receiving pilot signals from a second sector, the signals received in the second sector being received in frequency subbands of a second group of frequency subbands, the frequency subbands being frequency subbands of a frequency band,
- means for determining information related to the received pilot signals in the frequency subbands in order to enable the determination if the terminal is located in the second sector or in one of the first sectors.

The present invention concerns also a method for determining in which sector a terminal of a wireless telecommunication network is located, the terminal receiving pilot signals in frequency subbands of the first group of frequency subbands from two juxtaposed first sectors, characterised in that the method comprises the steps executed by the terminal of :
- receiving pilot signals from a second sector, the signals received in the second sector being received in subbands of a second group of frequency subbands, the frequency subbands being frequency subbands of a frequency band,
- determining information related to the received pilot signals in the frequency subbands in order to enable the determination if the terminal is located in the second sector or in one of the first sectors.

Thus, each terminal is able to make some measurements on the received pilot signals and get information about the channel conditions which exist between itself and the base station.

The present invention concerns also a signal transferred by a base station of a wireless telecommunication network for a terminal, the base station comprising antennas through which, the transferred signal is directed into a first sector, characterised in that the transferred signal is further directed into a second sector and in that the signal is representative of information indicating which frequency subbands have to be used for the transfer of signals into the first sector between the base station and the terminal and which frequency subbands have to be used for the transfer of signals into the second sector between the base station and the terminal.

Since the features and advantages relating to the signal are the same as those set out above related to the method and device according to the invention, they will not be repeated here.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computers programs are the same as those set out above related to the methods and devices according to the invention, they will not be repeated here.

The characteristics of the invention will emerge more clearly from a reading of the following description of an example of embodiment, the said description being produced with reference to the accompanying drawings, among which :
Fig. 1 shows an example of a base station which radiates signals in plural sectors ;
Fig. 2 shows an example of the area wherein signals transferred by the base station are directed into plural sectors according to the present invention ;
Fig. 3 is a diagram representing the architecture of a base station according to the present invention ;
Fig. 4 is a diagram representing the architecture of a terminal according to the present invention ;
Fig. 5 shows an example of a frequency band which is divided in frequency subbands which are allocated by the base station to a first or a second group of frequency subbands ;
Fig. 6 is a diagram representing the architecture of a radio interface of the base station ;
Fig. 7 shows an algorithm executed by each terminal according to the present invention;
Fig. 8 is an algorithm executed by the base station according to the present invention ;
Fig. 9 is an algorithm executed by the base station according to a first variant realisation of the invention ;
Fig. 10 is an algorithm executed by the base station according to a second variant of realisation of the invention.

**Fig. 1** shows an example of a base station which radiates signals in plural sectors.

The Fig. 1 discloses, as proposed in the prior art, an example of a base station which radiates signals in plural sectors.

**Fig. 2** shows an example of the area wherein signals transferred by the base station are directed into plural sectors according to the present invention.

The base station 10 of the wireless telecommunication network comprises at least four first antennas not shown in the Fig. 2 which radiate signals into four first sectors noted 15a, 15b, 15c and 15d. The signals directed into the first sectors 15 are radiated in frequency subbands of a first group of frequency subbands. The base station 10 also radiates also, preferably through the same antennas as the one used for the first sectors 15, signals into four second sectors noted 25a, 25b, 25c and 25d. The signals directed into the second sectors 25 are radiated in frequency subbands of a second group of frequency subbands which are different from the frequency subbands of the first group of frequency subbands.

The signals radiated in each sector 15 or 25 are directed using the technique known under the name of beamforming.

It has to be noted here that, in a variant of realisation, the base station 10 radiates signals into a more important number of first and second sectors using a more important number of antennas.

For the sake of simplicity, only two terminals 20a and 20b are shown in the Fig. 2, but we can understand that much more terminals 20 are located in the first sectors 15 and in the second sectors 15.

According to the present invention, the base station 10 directs the signals radiated in each second sector 25 respectively in a direction which is sensibly equal to the direction of the frontier of two juxtaposed first sectors.

A sensibly equal direction means that the direction is equal to the angle of the direction plus or minus 360/(4**N*) degrees, where N is the number of antennas of the base station 10 which is, in the present example, the same as the number of first sectors 15.

The base station 10 directs the signals radiated in the second sector 25a in a main direction which is sensibly equal to the direction of the frontier of the first sectors 15a and 15b.

The base station 10 directs the signals radiated in the second sector 25b in a main direction which is sensibly equal to the direction of the frontier of the first sectors 15b and 15c.

The base station 10 directs the signals radiated in the second sector 25c in a main direction which is sensibly equal to the direction of the frontier of the first sectors 15c and 15d.

The base station 10 directs the signals radiated in the second sector 25d in a main direction which is sensibly equal to the direction of the frontier of the first sectors 15d and 15a.

The base station 10 transfers at least one pilot signal in each frequency subband of the first group of frequency subbands. When the pilot signals are transferred simultaneously, the pilot signal transferred in each subband of the first group of frequency subbands in a first sector 15 is different from the pilot signal transferred in the same frequency subband in the other first sectors 15.

The base station 10 transfers at least one pilot signal in each subband of the second group of frequency subbands. When the pilot signals are transferred simultaneously, the pilot signal transferred in each subband of the second group of frequency subbands in a second sector 15 is different from the pilot signal transferred in the same frequency subband in the other second sectors 15.

It has to be noted here that, when the pilot signals are transferred in the first or the second sectors alternatively, the pilot signals don't need to be different.

Each terminal 20 located in the total area covered by the signals transferred by the base station 10 receives some of these pilot signals according to the sector 15 and 20 wherein it is located. Each terminal 20 reports information related to the received pilot signals to the base station 10.

Information related to the received pilot signals are as example and in a non limitative way, the power strength of the received pilot signals or the SINR measured for each received pilot signals.

The terminal 20 are, as example and in a non limitative way, mobile phones or personal computers or personal digital assistants.

The terminal 20a is located in the frontier area of the first sectors 15c and 15c and in the second sector 25c. The terminal 20a receives then the pilot signals transferred in the frequency subbands of the first group of frequency subbands and in the frequency subbands of the second of frequency subbands.

As the terminal 20a is located in the frontier area of the first sectors 15c and 15c, the power of the pilot signals transferred in the frequency subbands of the first group of frequency subbands are normally lower than the one received in the frequency subbands of the second group of frequency subbands.

The terminal 20a reports such information related to the received pilot signals to the base station 10 which determines that the terminal 20a is located in the second sector 25c. The information related to the received pilot signals are information related to each received pilot signals or information related to the received pilot signals for which the measured power strength or the SINR is upper than a predetermined threshold or information related to the received pilot signals for which the measured power strength or the SINR is lower than a predetermined threshold.

The base station 10 determines the group of frequency subbands to be used for transferring data to the terminal 20a. In the present example, the base station 10 determines the second group of frequency subbands as the one to be used for transferring signals to the terminal 20a. In a preferred mode of realisation of the present invention, the base station 10 determines also which frequency subbands of the second group of frequency subbands have to be used for the transfer of signals to the terminal 20a according to the received information related to pilot signals.

The terminal 20b is located in the first sector 15d and in the second sector 25c. The terminal 20b receives then the pilot signals transferred in the frequency subbands of the first group of frequency subbands and in the frequency subbands of the second group of frequency subbands.

As the terminal 20b is not located in the frontier area of two first sectors 15 or two second sectors 25, the power of the pilot signals transferred in the frequency subbands of the first group of frequency subbands are normally sensibly equal to the one received in the frequency subbands of the second group of frequency subbands.

The terminal 20b reports such information related to the received pilot signals to the base station 10 which determines that the terminal 20b is located both in the first sector 15d and in the second sector 25c.

The base station 10 determines the group of frequency subbands to be used for transferring data to the terminal 20b. The group of frequency subbands to be used for transferring data to the terminal 20b is as example the first group of frequency subbands. In a preferred mode of realisation of the present invention, the base station 10 determines also which frequency subband of the first group of frequency subbands have to be used for the transfer of signals to the terminal 20a according to the received information related to pilot signals.

The terminals 20 are able to receive or establish some communication through the base station 10 of the wireless telecommunication network by transferring and/or receiving signals in the determined frequency subbands.

The communications are established or received with other terminals 20 of the wireless telecommunication network composed of plural base stations 10 according to the invention or the communications are established or received with other telecommunication devices through a wired communication network like a telephone network or an Internet network or through a combination of above cited networks.

It has to be noted here that, the first and second sector described in the Fig. 1 cover sensibly equal areas size. According to the present invention, the first or the second sectors may cover different area sizes, a second sector can cover almost two first sectors or only the frontier area of two first sectors.

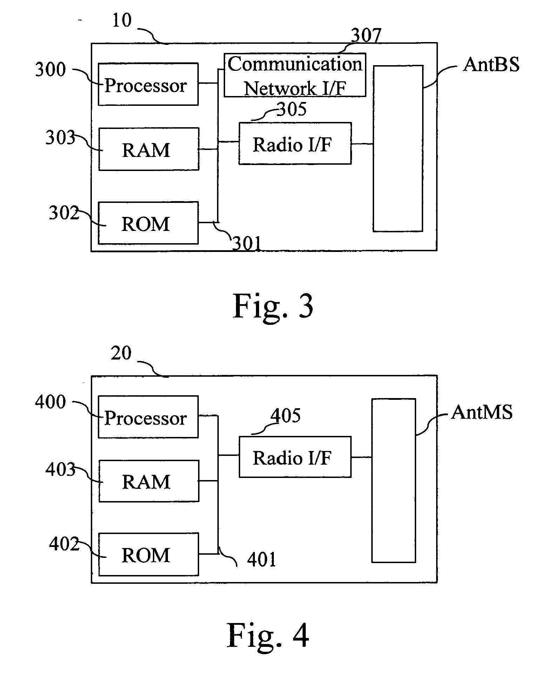

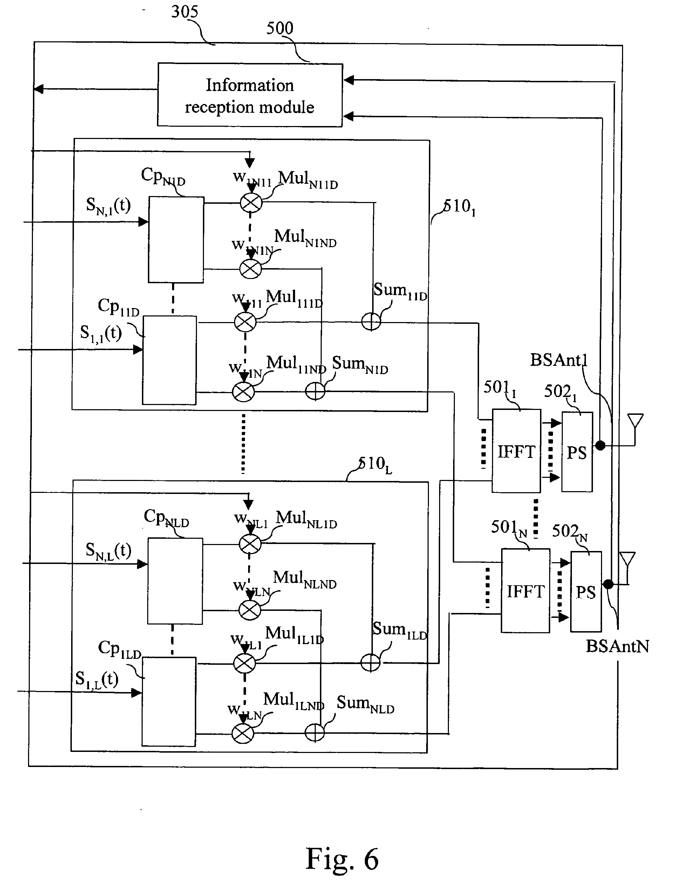

**Fig. 3** is a diagram representing the architecture of a base station according to the present invention.

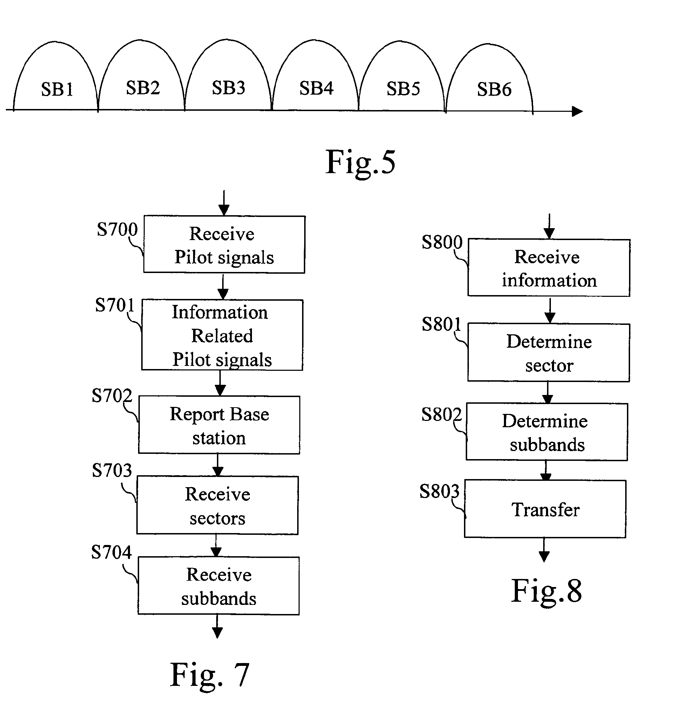

The base station 10 has, for example, an architecture based on components connected together by a bus 301 and a processor 300 controlled by programs as disclosed in the Figs. 8 and 9 and/or 10.

The bus 301 links the processor 300 to a read only memory ROM 302, a random access memory RAM 303, a radio interface 305 and a telecommunication network interface 307.

The RAM memory 303 contains registers intended to receive variables, and the instructions of the programs related to the algorithms as disclosed in the Figs. 8 and 9 and/or 10.

The read only memory 302 contains instructions of the programs related to the algorithm as disclosed in the Figs. 8 and 9 and/or 10 which are transferred, when the base station 10 is powered on to the RAM memory 303.

The radio interface 305 comprises means for directing the signals radiated in the respective first and second sectors 15 and 20 in frequency subbands.

The radio interface 305 will be described more precisely in reference to the Fig. 6.

The telecommunication network interface 307 enables the reception of a message from a telecommunication network representative of a request for an establishment of a communication with a terminal 20 located in the first and/or second sectors 15 or 25. The telecommunication network is the wireless telecommunication network itself or a wired communication network like a telephone network or an Internet network or through a combination of above cited networks.

**Fig. 4** is a diagram representing the architecture of a terminal according to the present invention.

The terminal 20 has, for example, an architecture based on components connected together by a bus 401 and a processor 400 controlled by programs as disclosed in the Fig. 7.

The bus 401 links the processor 400 to a read only memory ROM 402, a random access memory RAM 403 and a radio interface 405.

The radio interface 405 is linked to an antenna array AntMS.

The RAM memory 403 contains registers intended to receive variables, and the instructions of the program related to the algorithm as disclosed in the Fig. 7.

The read only memory 402 contains instructions of the programs related to the algorithms as disclosed in the Fig. 7 which are transferred, when the base station 10 is powered on, to the RAM memory 403.

The radio interface 405 comprises means for receiving, through at least an antenna of the antenna array AntMS, plural pilot signals, means for determining information related to the received pilot signals from the base station 10 in the frequency subbands and means for transferring the determined information to the base station 10 through the antenna array AntMS.

In another mode of realisation of the present invention, each of the determined information related to the received pilot signals are transferred to the processor 400 which determines which information related to the received pilot signals has to be transferred to the base station 10.

It has to be noted here that, the radio interface 405, prior to transfer the signals to the antenna array AntBS, frequency up converts, maps and so on the signals, as it is done in classical wireless telecommunication devices.

The antenna array AntMS is composed of at least one antenna which is used for the transfer or the reception of signals in the frequency subbands.

It has to be noted here that the signals received from each antenna BSAnt1 to BSAntN are frequency down converted, demapped and so on, as it is done in classical wireless telecommunication devices.

**Fig. 5** shows an example of the frequency band which is divided in frequency subbands which are allocated by the base station to a first or a second group of frequency subbands.

The horizontal axis of the Fig. 5 corresponds to the frequency band used by the present invention. The frequency band used by the present invention is divided in consecutive frequency subbands. As example and in a non limitative way, the frequency band is equal 1.2 MHz and is decomposed in six frequency subbands noted SB1 to SB6 of 200KHz.

In the Fig. 5, six frequency subbands SB1 to SB6 are depicted but we can understand that a reduced number of frequency subbands or a more important number of frequency subbands can be used in the present invention. As example, if the frequency band is equal 20 MHz, it is decomposed in an hundred frequency subbands of 200KHz.

In a preferred mode of realisation of the present invention, predetermined frequency subbands are used for the transfer of signals in the respective first and second sectors.

The frequency subbands SB1, SB3 and SB5 are the frequency subbands of the first group of frequency subbands used for transferring signals in the first sectors 15. The frequency subbands SB2, SB4 and SB6 are the frequency subbands of the second group of frequency subbands used for transferring signals in the second sectors 25. Two consecutive frequency subbands are preferably allocated to two different groups of frequency subbands in order to reduce the interferences between signals transferred in the frequency subbands of the first group of frequency subbands or between signals transferred in the frequency subbands of the second group of frequency subbands.

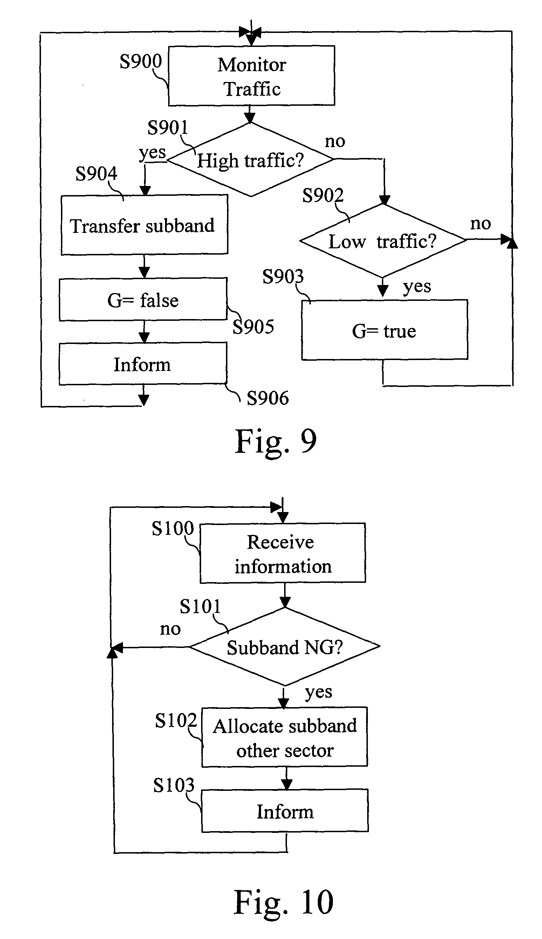

According to a first and a second variants of realisation of the present invention, at least a frequency subband of the first group of frequency subbands is allocated to the second group of frequency subbands as it will be disclosed in the algorithms disclosed in the Figs. 9 and 10. The reciprocal is also applicable for the frequency subbands of the second group of frequency subbands.

**Fig. 6** is a diagram representing the architecture of a radio interface of the base station.

The radio interface 305 of the base station 10 comprises an information reception module 500.

The information reception module 500 comprises means for receiving the information related to pilot signals transferred by the terminals 20.

The radio interface 305 comprises *L* signals processing devices noted 510₁ to 510_{L}, *N* IFFT modules noted 501₁ to 501_{N} and *N* parallel to serial converters noted 502₁ to 502_{N} which converted the *N* inversed Fourier transformed signals into signals transferred to the respective antennas BSAnt1 to BSAntN of the antenna array AntBS.

It has to be noted here that *L* denotes the number of frequency subbands and *N* denotes the number of antennas of the antenna array AntBS and in the present case, the number of first or second sectors. The number of first and second sectors can, according to the present invention, be lower than the number of antennas of the antenna array AntBS.

According to the example of the Fig. 5, if the frequency band is divided into six frequency subbands SB1 to SB6, the radio interface comprises six signals processing devices noted 510.

Each signals processing device 510₁, with *l*=1 to *L*, comprises *N* duplication modules noted Cp_{11D} to CP_{NID} which duplicate the pilot signals. According to the example of the Fig. 2, as the base station 10 has four antennas, four duplication modules Cp_{11D} to CP_{NID} duplicate four different pilot signals. Each signal processing device 510₁ comprises means for weighting the duplicated pilot signals to be transferred to the terminal 20 by weighting vectors *w_{n,l}* with *l*=1 to *L* and *n=*1 to *N.* According to the example of the Fig. 2, as the base station 10 has four antennas, each weighting vector *w_{n,l}* comprises four coefficients noted *w*_{*n,l,*1} to *w*_{*n,l,*4}*.*

The weighting vectors *w_{n,l}* are the weighting vectors used for weighting the pilot signals transferred in the frequency subbands of the first or the second group of frequency subbands.

The means for weighting the signals to be transferred to the terminals 20 are composed of, *N*N* downlink multiplication modules noted Mul_{111D} to Mul_{NIND}, *N* downlink summation modules noted Sum_{11D} to Sum_{NID}.

Each duplicated signal is weighted by the coefficients of a downlink weighting vector *w_{n,t}* stored in the ROM memory 302 of the base station 10.

The signals weighted by the first element of each downlink weighting vector *w_{n,l}* are then summed by the adder Sum_{11D} and transferred to the IFFT module 501₁. The signals weighted by the second element of each downlink weighting vector *w_{n,l}* are then summed and transferred to the IFFT module 501₂ and so on until the *N-*th element of the weighting vectors *w_{n,t}*.

According to the example of the example of the Fig. 2 and the Fig. 5, the weighting vectors *w*_{*n,*1} weight the signals to be directed into the first sectors 15 in the frequency subband SB1. The weighting vectors *w*_{*n,*2} weight the signals to be directed into the second sectors 25 in the frequency subband SB2. The weighting vectors *w*_{*n,*3} weight the signals to be directed into the first sectors 15 in the frequency subband SB3. The weighting vectors *w*_{*n,*4} weight the signals to be directed into the second sectors 25 in the frequency subband SB4 and so on.

It has to be noted here that the signals are, prior to be transferred to each antenna BSAnt1 to BSAntN, frequency up converted, mapped and so on, as it is done in classical wireless telecommunication devices.

The signals noted S_{1,1}(t) to S_{N,1}(t) and S_{N,L}(t), S_{1,L}(t) in the Fig. 6 are the respective pilot signals transferred in each frequency subband.

**Fig. 7** shows an algorithm executed by each terminal according to the present invention.

The present algorithm is executed periodically by each terminal 20.

At step S700, some of the pilot signals transferred by the base station 10 are received by radio interface 405 of the terminals 20. As example, the radio interface 405 of the terminal 20a receives the pilots signals transferred in the frequency subbands SB1 to SB6 as it is located in the frontier area of the first sectors 15c and 15c, and in the sector 25c.

At next step S701, the radio interface 405 determines information relation to the received pilot signals.

The information related to the received pilot signals are in a preferred mode of realisation, information related to each received pilot signals or information related to the received pilot signals for which the measured power strength or the SINR is upper than a predetermined threshold or information related to the received pilot signals for which the measured power strength or the SINR is lower than a predetermined threshold.

In another mode of realisation of the present invention, the information related to the received pilot signals are information identifying the sector for which, the average of the measured power strength or the average of the measured SINR is the most important. As it has been disclosed previously, for the terminal 20a, the information related to the received pilot signals identifies the sector 25c.

In another mode of realisation of the present invention, the information related to the received pilot signals are information identifying each frequency subband of a sector which has a power strength or a SINR higher than a predetermined threshold. The power of some received pilot signals transferred in some frequency subbands is sometime altered by some multi paths or some other propagation conditions. Such frequency subbands can not be used efficiently for the transfer of signals between the base station 10 and the telecommunication device 20a. The terminal 20a, reports then such conditions.

At next step S702, the radio interface 405 reports the information related to the received pilot signals to the base station 10.

In the preferred mode of realisation, at next step S703, the terminal 20a receives, from the base station 10, signals comprising information identifying which sector 15 or 25 the terminal 20a belongs to. In the preferred mode of realisation, the terminal 20a receives also signals comprising information identifying which frequency subbands of the second group of frequency subband have to be used between the terminal 20a and the base station 10.

**Fig. 8** is an algorithm executed by the base station according to the present invention.

Such algorithm is executed in parallel for each terminal 20.

At step S800, the signals transferred at step S702 by a terminals 20, are received through the radio interface 305 of the base station 10. Such signals represent information related to pilot signals received by the terminals 20. The information related to the received pilot signals are in a preferred mode of realisation, the power strength of the received pilot signals or the SINR measured for each received pilot signals.

At next step S801, the processor 300 determines, from the information related to the received pilot signals, the sector 15 or 25 in which signals to be transferred to the terminal 20 have to be transferred. Such determination is preferably made by selecting the sector 15 or 25 for which the pilot signals transferred in the frequency subbands have larger power strength or SINR than other frequency subbands. As example, as the terminal 20a is located in the frontier area of the first sectors 15c and 15d, the pilot signals transferred in the frequency subbands of the second group of frequency subbands have larger power strength or SINR than the pilot signals transferred in the frequency subbands of the first group of frequency subbands. The processor 300 determines that the signals to be transferred to the terminal 20a have to be transferred in the second sector 25c.

According to another mode of realisation of the present invention, the determination is made by reading the identifier of the sector 15 or 25 which is transferred by the terminal 20.

At next step S802, the processor 300 determines, from the determined sector, if the first group or the second group of frequency subbands has to be used. According to another mode of realisation of the present invention, the determination is made by reading the identifiers of the sectors 15 or 25 which have been transferred by the terminal 20.

As the second 15c is determined, the second group of frequency subbands is determined as the one to be used. Preferably, the processor 300 determines which frequency subbands of the second group of frequency subbands have to be used between the base station 10 and the terminal 20 which sent the information related to the pilot signals. Such determination is made by comparing the received power strength or SINR for these frequency subbands to a predetermined threshold.

At next step S803, the processor 300, according to the preferred mode of realisation of the present invention, commands the transfer of information identifying the determined sector 15 or 25 and/or the information identifying the determined frequency subbands to the terminal 20.

**Fig. 9** is an algorithm executed by the base station according to the first variant of realisation of the invention.

The present algorithm is executed in parallel with the algorithm which is disclosed in the Fig. 8.

According to the first variant of realisation of the present invention, the frequency subbands are dynamically allocated to the first or the second group of frequency subbands according to the quantity of data transferred in each sector 15 and 25.

More precisely, the base station 10 determines if a frequency subband has to belong to the first or the second group of frequency subbands according to the quantity of information transferred in the first and/or second sectors.

At step S900, the processor 300 monitors the quantity of data transferred in the first sectors 15.

At next step S901, the processor 300 checks whether or not the monitored quantity of data is representative of a high traffic in at least one sector of the first sectors 15.

If the traffic is not high in each of the first sectors, the processor 300 moves to step S902 and checks whether or not the monitored quantity of data is representative of a low traffic in each first sector.

If the monitored quantity of data is not representative of a low traffic in at least one first sector 15, the processor 300 returns to step S900 and then considers the other sectors, i.e. the second sectors 25.

If the monitored quantity of data is representative of a low traffic in each first sector 15, the processor 300 move to step S903 and set a variable noted G to true and then returns to step S900 and then considers the other sectors, i.e. the second sectors 25.

At step S900, the processor 300 monitors the quantity of data transferred in the second sectors 25.

At next step S901, the processor 300 checks whether or not the monitored quantity of data is representative of a high traffic in at least one second sector 25.

If the traffic is high in at least one the first sector 15, the processor 300 moves to step S904, checks whether or not the variable G is equal to true. In that case, the processor 300 allocates a frequency subband which belong to the first group of frequency subbands to the second group of frequency subband.

At next step S905, the processor 300 set the variable G to false.

At next step S906, the processor 300 commands the transfer of signals in the first sector and in the second sector which is representative of information indicating which frequency subbands have to be used for the transfer of signals in the first sector and which frequency subbands have to be used for the transfer of signals in the second sector.

The processor 300 returns then to the step S900 and considers the other sectors, i.e. the first sectors 15.

It has to be noted here that different numbers of subbands can be allocated to different first sectors 15 or different second sectors 20.

**Fig. 10** is an algorithm executed by the base station according to the second variant of realisation of the invention.

The present algorithm is executed in parallel with the algorithm which is disclosed in the Fig. 8 and in parallel or not with the algorithm which is disclosed in the Fig. 9.

According to the second variant of realisation of the present invention, the frequency subbands are dynamically allocated to the first or the second group of frequency subbands according to the information related to the pilot symbols received from the terminals 20.

At step S100, the signals transferred at step S702 by the terminals 20, are received through the radio interface 305 of the base station 10. Such signals represent information related to pilot signals received by the terminals 20.

At step S 101, the processor 300 determines if the information related to a pilot signal transferred in a given frequency subband and received from the terminals 20, as example the frequency subband SB1, is representative of low power strength of a low SINR.

If the majority of the information related to a pilot signal transferred in the given frequency subband SB1 is upper than a predetermined threshold, as example 60 percent, the processor 300 returns to step S100 and considers another frequency subband.

If the majority of the information related to a pilot signal transferred in the given frequency subband SB1 is lower than a predetermined threshold, as example 20 percent, the processor 300 moves to step S102 and allocates the given frequency subband SB1 which belongs to the first group of frequency subbands to the second group of frequency subbands.

At next step S103, the processor 300 commands the transfer of signals in the first sector and in the second sector which is representative of information indicating which frequency subbands have to be used for the transfer of signals in the first sectors 15 and which frequency subbands have to be used for the transfer of signals in the second sectors 25.

Then processor 300 returns to step S100 and considers another frequency subband.

Naturally, many modifications can be made to the embodiments of the invention described above without departing from the scope of the present invention.

In particular, the present invention has been disclosed with groups of first sectors and groups of second sectors. The present invention is also applicable in a more important group of sectors.

## Claims

1. Base station of a wireless telecommunication network, the base station comprising antennas and means for directing the signals transferred by the antennas into plural first sectors, at least one first sector being juxtaposed to two other first sectors through respective frontiers, **characterised in that** the base station further comprises means for directing the signals transferred by the antennas into at least one second sector, the second sector or each second sector having a direction which is sensibly equal to the direction of a single frontier of two first sectors.

2. Base station according to claim 1, **characterised in that** the signals transferred into the first sectors are transferred in frequency subbands of a first group of frequency subbands and the signals transferred into the second sector or each second sector are transferred in frequency subbands of a second group of frequency subbands different from the first group of frequency subbands.

3. Base station according to claim 2, **characterised in that** the base station comprises means for transferring pilot signals in each frequency subband.

4. Base station according to claim 3, **characterised in that** the base station comprises means for receiving information related to the pilot signals from the terminal and means for determining if the signals to be transferred to the terminal have to be transferred into one of the first sectors or into the second sector.

5. Base station according to claim 4, **characterised in that** the base station comprises means for determining in which frequency subbands of the first group of frequency subbands or in which frequency subbands of the second group of frequency subbands, the signals to be transferred to the terminal have to be transferred according to the information related to the pilot signals.

6. Base station according to claim 4 or 5, **characterised in that** the base station comprises means for determining if a frequency subband has to belong to the first or to the second group of frequency subbands according to the quantity of information transferred in the first and/or second sectors.

7. Base station according to any of the claims 4 to 6, **characterised in that** the base station comprises means for determining if a frequency subband has to belong to the first or the second group of frequency subbands according to the information related to the pilot signals.

8. Method for transferring signals by a base station of a wireless telecommunication network, the base station comprising antennas, the signals transferred by the antennas being directed into plural first sectors, at least one first sector being juxtaposed to two other first sectors through respective frontiers, **characterised in that** the method comprises the step executed by the base station of directing the signals transferred by the antennas into at least one second sector, the second sector or each second sector having a direction which is sensibly equal to the direction of a single frontier of two first sectors.

9. Device for determining in which sector a terminal of a wireless telecommunication network is located, the terminal receiving pilot signals in frequency subbands of a first group of frequency subbands from two juxtaposed first sectors, **characterised in that** the device is included in the terminal and comprises :
- means for receiving pilot signals from a second sector, the signals received in the second sector being received in frequency subbands of a second group of frequency subbands, the frequency subbands being frequency subbands of a frequency band,
- means for determining information related to the received pilot signals in frequency subbands in order to enable the determination if the terminal is located in the second sector or in one of the first sectors.

10. Method for determining in which sector a terminal of a wireless telecommunication network is located, the terminal receiving pilot signals in subbands of a first group of frequency subbands from two juxtaposed first sectors, **characterised in that** the method comprises the steps executed by the terminal of :
- receiving pilot signals from a second sector, the signals received in the second sector being received in frequency subbands of a second group of frequency subbands, the frequency subbands being frequency subbands of a frequency band,
- determining information related to the received pilot signals in the frequency subbands in order to enable the determination if the terminal is located in the second sector or in one of the first sectors.

11. Computer program which can be directly loadable into a programmable device, comprising instructions or portions of code for implementing the steps of the method according to claim 8, when said computer program is executed on a programmable device.

12. Computer program which can be directly loadable into a programmable device, comprising instructions or portions of code for implementing the steps of the method according to claim 10, when said computer program is executed on a programmable device.

13. Signal transferred by a base station of a wireless telecommunication network for a terminal, the base station comprising antennas through which the transferred signal is directed into a first sector, **characterised in that** the transferred signal is further directed into a second sector and **in that** the signal is representative of information indicating which frequency subbands have to be used for the transfer of signals into the first sector between the base station and the terminal and which frequency subbands have to be used for the transfer of signals into the second sector between the base station and the terminal.
